# EUROPÄISCHE PATENTSCHRIFT

(11) **EP 3 717 231 B1**
(45) Veröffentlichungstag und Bekanntmachung des Hinweises auf die Patenterteilung: **02.12.2026**
(21) Anmeldenummer: 18765103.9
(22) Anmeldetag: 04.09.2018
(51) Int. Cl.: B32B 5/18, B32B 5/24, B32B 7/12, B32B 27/06, B32B 27/12, B32B 37/00

(54) **KUNSTSTOFFFOLIENLAMINAT MIT SCHAUM MITTLERER DICHTE**
LAMINATE OF PLASTIC FILMS WITH FOAM OF MEDIUM DENSITY
FEUILLES PLASTIQUES LAMINÉ AVEC MOUSSE DE DENSITÉ MOYENNE

(30) Priorität: 29.11.2017 DE 102017221414
(43) Veröffentlichungstag der Anmeldung: 07.10.2020
(73) Patentinhaber: Benecke-Kaliko GmbH, 30419 Hannover (DE)
(72) Erfinder: HÜLSEWEDE, Volker, 30419 Hannover (DE); WEBER, Daniel, 30419 Hannover (DE); MANI, Joseph, 30419 Hannover (DE)
(74) Vertreter: Preusser, Andrea
(86) Internationale Anmeldenummer: PCT/EP2018/073651
(87) Internationale Veröffentlichungsnummer: WO 2019/105612

(56) Entgegenhaltungen:
- DE-A1- 102014 222 958
- KR-A- 20130 001 414

## Beschreibung

Die Erfindung betrifft ein Kunststofffolienlaminat auf Basis von thermoplastischen Polyolefinen, insbesondere für das negativ- und positiv-Tiefziehverfahren, einen daraus gebildeten Formkörper, ein Verfahren zu dessen Herstellung und vorteilhafte Verwendungen des Kunststofffolienlaminats, insbesondere für Verkleidungen von Fahrzeuginnenräumen. Kunststofffolienlaminate, die aus einer kompakten Oberfolie und einem geschäumten polyolefinbasierten Polymermaterial bestehen, werden als Schaumfolienlaminatkonstruktionen verwendet. Die kompakte Oberfolie ist häufig ebenfalls aus einem polyolefinbasierten Material. Derartige Konstruktionen werden häufig im Automobil-Innenraum auf Instrumententafeln und Türverkleidungen verwendet. Als tiefziehfähige Schaumfolienlaminate werden gewöhnlich solche mit einer polyolefinbasierten Schaumschicht mit einer Dichte von nicht mehr als 200 kg/m³, häufig nicht mehr als 100 kg/m³, verwendet. Polyolefin-Schäume und Verfahren zu deren Herstellung werden z.B. in EP 1940609 B1, DE 102004025157 A1, EP 0704476 B1, JP H04-82014B2, EP 1752485 B1, US 2011/0014835 A1 und US 2003/207953 A1 beschrieben. Die Schäume weisen in der Regel eine Dichte im Bereich von etwa 20 bis 200 kg/m³, es werden aber z.B. in der EP 1752485 B1 auch Schäume mit höheren Dichten bis zu 400 kg/m³ beschrieben.

Zur Herstellung der Schäume wird das polyolefinbasierte Material üblicherweise als kompakte, Treibmittel enthaltende Folie extrudiert, durch Elektronenstrahlung vernetzt und anschließend durch Einwirkung von Wärme geschäumt.

Instrumententafeln im Automobilinnenbereich können durch Schaumfolienlaminate oder Kompaktfolien, die hinterschäumt werden, dekoriert werden. Schaumfolienlaminate können aber nur bis zu einer geringen geometrischen Komplexität thermoformiert werden und reißen darüber hinaus. In diesen Fällen werden Kompaktfolien eingesetzt, die nach dem Thermoformieren hinterschäumt werden müssen. Sie sind daher schwerer als die Bauteile aus den oben genannten Schaumfolienlaminaten. Weiter müssen die Kompaktfolien zur Sicherstellung eines akzeptablen Aufreißverhaltens im Falle einer Airbag-Auslösung in den überwiegenden Fällen geschwächt werden. Dieser zusätzliche Arbeitsschritt verursacht zusätzliche Kosten. In vielen Fällen kommt es zudem zu einer Sichtbarkeit der Schwächungslinie, was als optischer Mangel gewertet wird und dementsprechend zu vermeiden ist.

DE 102014222958 A1 betrifft ein Verfahren zur Herstellung eines Schaumfolienlaminats mit mindestens einer kompakten Deckschicht und mindestens einer mit der Deckschicht verbundenen Schicht aus extrudiertem geschäumtem Kunststoff, für den in den Beispielen lineares Polyethylen niederer Dichte und Polypropylen-Random-Copolymer eingesetzt wird.

KR 20130001414 A beschreibt einen Mehrschichtaufbau aus einer Schaumstoffplatte als Kernmaterialschicht und einer Verstärkungsschicht. Für den Schaumstoff kann z.B. Polypropylen eingesetzt werden.

Die Aufgabe der vorliegenden Erfindung besteht darin, die vorstehend beschriebenen Nachteile des notwendigen Schwächungsschrittes sowie des höheren Gewichtes bezüglich der Kompaktfolien zu überwinden. Insbesondere bestand die Aufgabe der vorliegenden Erfindung in der Bereitstellung einer Folie, die insbesondere für den negativ- oder positiv-Thermoformierprozess aber auch für weitere übliche Verfahren wie zum Beispiel dem Presskaschieren geeignet ist, insbesondere auch bei höherer geometrischer Komplexität, und ein deutlich geringeres Flächengewicht als die oben beschriebenen Kompaktfolien aufweist. Zusätzlich sollen die Folien eine akzeptable Airbagöffnung ohne eine nachträglich eingebrachte Schwächung ermöglichen.

Dabei soll das Kunststofffolienlaminat mit den üblichen Verfahren wie Extrusion und Kaschierung herstellbar und durch Negativ-Tiefziehen (IMG Verfahren) und Positiv-Tiefziehen zu verarbeiten sein.

Zu Erreichung der Airbagfunktionalität galt es die Anisotropie der Konstruktion sowie die Kräfte, die zum Reißen der Folie aufgebracht werden müssen, zu minimieren. Eine Reduktion der Flächengewichte konnte unter Beibehaltung einer konstanten Dicke durch eine Dichtereduktion durch Aufschäumen und somit durch Einbringung sphärischer Hohlräume bewerkstelligt werden, wobei überraschenderweise eine gute Tiefziehfähigkeit beibehalten wird. Somit wurden kompakte Folien, z.B. als Dekorschichten, zu Wahrung der Oberflächeneigenschaften, wie Kratz- und Abriebbeständigkeit, mit geschäumten Schichten mit einer Dichte im Bereich von 250 bis weniger als 600 kg/m³ laminiert.

Die Erfindung betrifft daher ein Kunststofffolienlaminat, umfassend eine ein- oder mehrlagige Oberfolie und mindestens eine Schaumschicht aus einem vernetzten und geschäumten Kunststoffmaterial, dadurch gekennzeichnet, dass mindestens eine Schaumschicht eine Dichte von 250 bis kleiner 600 kg/m³ aufweist und das Kunststoffmaterial für die Schaumschicht eine Mischung aus zwei unterschiedlichen linearen Polyethylenen niederer Dichte (LLDPE) mit einem Schmelzflussindex MFI von kleiner 2 g/10 min gemäß ISO 1133 (190 °C, 2,16 kg) und eine Mischung von zwei unterschiedlichen Polypropylen-Random-Copolymeren (PP-R) mit einem Schmelzpunkt von nicht mehr als 150 °C und einem Schmelzflussindex MFI von 0,2 bis 12 g/10 min gemäß ISO 1133 (230 °C, 2,16 kg) umfasst.

Die erfindungsgemäßen Kunststofffolienlaminate und deren Einzelschichten konnten nach Standardverfahren hergestellt werden und verarbeitet werden. Mit den erfindungsgemäßen Kunststofffolienlaminaten konnten im Gegensatz zu den bekannten Schaumfolienlaminaten auch tiefgezogene Bauteile oder durch andere übliche Verfahren, wie Presskaschieren, hergestellte Bauteile produziert werden, die über eine kritische Dehnung von 200% hinausgehen. Die Folienkonstruktion ist etwa 40 % leichter als eine Standardkompaktfolie und etwa 20 % schwerer als normale Schaumfolienlaminate.

Die erfindungsgemäßen Kunststofffolienlaminate sind tiefziehfähig. Außerdem kann das Kunststofffolienlaminat sowohl im IMG Verfahren als auch im Positiv-Tiefziehverfahren verarbeitet werden. Sie eignen sich daher insbesondere für die Fahrzeuginnenverkleidung.

Im Folgenden wird die Erfindung im Einzelnen erläutert.

Die Zugdehnung, längs bzw. quer [%], wie in dieser Anmeldung verwendet, wird gemäß DIN EN ISO 527-3 vom Juli 2003 (Probekörper Typ 2, Geschwindigkeit 500 mm/min) bestimmt.

Die Zugfestigkeit, längs bzw. quer [N/mm2], wie in dieser Anmeldung verwendet, wird gemäß DIN EN ISO 527-3 vom Juli 2003 (Probekörper Typ 2, Geschwindigkeit 500 mm/min) bestimmt.

Der Schmelzflussindex MFI (190 °C, 2,16 kg) bzw. (230 °C, 2,16 kg), wie in dieser Anmeldung verwendet, wird bestimmt gemäß DIN EN ISO 1133; 2005.06. Der Schmelzpunkt, wie in dieser Anmeldung verwendet, wird bestimmt durch Differential-Scanning-Calorimetry (DSC) mit einer Heizrate von 10 K/min. Ethylen-basierte Polymere weisen einen Gewichtsanteil an Ethylen von mindestens 50% auf. Propylen-basierte Polymere weisen einen Gewichtsanteil an Propylen von größer als 50% auf. Alpha-Olefine sind bekanntlich Olefine, bei denen sich eine Doppelbindung endständig bzw. am C1-Atom befindet und schließen hier auch Ethen ein.

Das Kunststofffolienlaminat umfasst eine ein- oder mehrlagige Oberfolie und mindestens eine Schaumschicht. Die Oberfolie wird als Oberfolie bezeichnet, da sie bei typischen Anwendungen die obere bzw. die von außen sichtbare Oberfläche darstellt. In diesem Sinne wird im Kunststofffolienlaminat die Seite der Oberfolie als oben bzw. obere Seite und die Seite mit der mindestens einen Schaumschicht als unten bzw. untere Seite verstanden. Die Schaumschicht wird auch als Unterfolie bezeichnet. Im Folgenden beziehen sich Angaben zu relativen Anordnungen auf diese Bezugsrichtung, sofern nicht anders angegeben.

Die Oberfolie kann aus einer oder mehreren Lagen bestehen, zum Beispiel aus einer, zwei, drei oder mehr Lagen. Es kann sich somit um eine einzelne Folie oder um einen Verbund von zwei, drei oder mehr Folien handeln. Solche ein- oder mehrlagigen Folien sind in der Technik üblich. Die Oberfolie ist bevorzugt einlagig oder zweilagig.

Die ein- oder mehrlagige Oberfolie ist bevorzugt eine kompakte Folie, insbesondere die einlagige Oberfolie. Wie dem Fachmann bekannt, handelt es sich bei kompakten Folie um Folien, die nicht geschäumt sind. Die ein- oder mehrlagige Oberfolie weist im allgemeinen eine Dichte von mindestens 0,86 g/cm³ auf. Die erfindungsgemäß verwendete ein- oder mehrlagige Oberfolie weist bevorzugt eine Dichte im Bereich von 0,88 bis 0,91 g/cm³ auf.

Die ein- oder mehrlagige Oberfolie ist insbesondere eine Kunststofffolie. Die ein- oder mehrlagige Oberfolie ist bevorzugt eine Polyolefin-Folie, eine Polyvinylchlorid-Folie oder eine Polyurethan-Folie, wobei eine Polyolefin-Folie bevorzugt ist.

In einer bevorzugten Ausführungsform ist die Oberfolie eine Polyolefin-Folie umfassend Ethylen-basiertes Polymer und Propylen-basiertes Polymer. In der Oberfolie können ein oder mehrere Ethylen-basierte Polymere und ein oder mehrere Propylen-basierte Polymere enthalten sein. Die ein- oder mehrlagige Oberfolie kann z.B. 20 bis 90 Gew.-% Ethylen-basiertes Polymer und 10 bis 80 Gew.-% Propylen-basiertes Polymer, bezogen auf das Gewicht der Kunststoffe in der ein- oder mehrlagigen Oberfolie, enthalten.

Bei dem Ethylen-basierten Polymer kann es sich um ein oder mehrere Ethylen-Homopolymere und/oder ein oder mehrere Ethylen-Copolymere handeln. Bei dem Propylen-basierten Polymer kann es sich um ein oder mehrere Propylen-Homopolymere und/oder ein oder mehrere Propylen-Copolymere handeln.

Als Ethylen-basierte Polymere können alle handelsüblichen Polymere eingesetzt werden, wie z.B. Ethylen-basierte Copolymere und / oder Ethylen-Propylen-Copolymere (PEP) und / oder Ethylen-Propylen-Kautschuk (EPR), EPM-Kautschuk (Ethylen-Propylen-Kautschuk), EPDM-Kautschuk (Ethylen-Propylen-Dien-Kautschuk) und / oder Polyethylene. Bevorzugt sind Ethylen-basierte Copolymere mit alpha-Olefinen mit 4 oder mehr C-Atomen, bevorzugt mit 4 bis 8 C-Atomen, wie z.B. Ethylen-Buten-Copolymere oder Ethylen-Octen-Copolymere. Als Propylen-basierte Polymere können alle handelsüblichen Polymere eingesetzt werden, wie z.B. homo-PP (Polypropylen-Homopolymer) oder Polypropylen-Copolymere, insbesondere mit Ethylen, wie z.B. PP-R (Polypropylen-Random-Copolymere), auch als PP-Random bezeichnet, oder b-PP (Polypropylen-BlockCopolymere).

Die ein- oder mehrlagige Oberfolie kann gegebenenfalls Additive enthalten, wobei es sich um auf diesem Gebiet übliche Additive handeln kann. Beispiele sind Vernetzungshilfsmittel, Antioxidationsmittel, Lichtschutzmittel, insbesondere UV-Lichtschutzmittel, Pigmente, wie z.B. Ruß, Gleitmittel und/oder Alterungsschutzmittel.

Das Kunststofffolienlaminat umfasst ferner mindestens eine Schaumschicht aus einem vernetzten und geschäumten Kunststoffmaterial. Mindestens eine Schaumschicht wird bei solchen Konstruktionen auch als Unterfolie bezeichnet. Mindestens eine Schaumschicht weist eine Dichte von 250 bis kleiner 600 kg/m³, bevorzugt von größer 250 bis kleiner 600 kg/m³, bevorzugter von größer 250 bis 400 kg/m³, auf.

Die Schaumschicht wird durch Vernetzten und Schäumen eines Kunststoffmaterials gebildet. Hierfür können die üblichen, dem Fachmann bekannten Verfahren zur Herstellung eines Schaumstoffs eingesetzt werden. Zur Herstellung der Schäume wird z.B. das Kunststoffmaterial enthaltend ein Treibmaterial als kompakte Folie extrudiert, durch Strahlung, wie z.B. Elektronenstrahlung, vernetzt und anschließend durch Einwirkung von Wärme geschäumt.

Übliche Extrudertypen sind geeignet, z.B. ein Doppelschneckenextruder. Das Extrudieren erfolgt insbesondere unterhalb der Zersetzungstemperatur des eingesetzten Treibmittels. Das Schäumen erfolgt oberhalb der Zersetzungstemperatur des eingesetzten Treibmittels, z.B. hängend in einem Schaumofen oder "schwimmend" in einem Salzbad.

Das Kunststoffmaterial für die Schaumschicht, d.h. das Kunststoffmaterial, mit dem durch Vernetzen und Schäumen das vernetzte und geschäumte Kunststoffmaterial gebildet wird, umfasst eine Mischung aus zwei unterschiedlichen linearen Polyethylenen niederer Dichte (LLDPE) mit einem Schmelzflussindex MFI von kleiner 2 g/10 min gemäß ISO 1133 (190 °C, 2,16 kg) und eine Mischung von zwei unterschiedlichen Polypropylen-Random-Copolymeren (PP-R) mit einem Schmelzpunkt von nicht mehr als 150 °C und einem Schmelzflussindex MFI von 0,2 bis 12 g/10 min gemäß ISO 1133 (230 °C, 2,16 kg). LLDPE und PP-R sind handelsübliche Kunststoffe. LLDPE ist ein ethylenbasiertes Polymer. PP-R ist ein propylenbasiertes Polymer.

Lineares Polyethylen niederer Dichte ist ein dem Fachmann gut bekannter, handelsüblicher Kunststoff, für den die Abkürzung LLDPE verwendet wird ("linear low density polyethylene"). Das erfindungsgemäß eingesetzte LLDPE weist einen Schmelzflussindex MFI von kleiner 2 g/10 min, bevorzugt im Bereich von 0,1 bis 2 g/10 min, gemäß ISO 1133 (190 °C, 2,16 kg), auf, wobei das Kunststoffmaterial eine Mischung von zwei solcher unterschiedlichen LLDPE umfasst.

Bei LLDPE handelt es sich um Copolymere von Ethylen mit mindestens einem anderem alpha-Olefin, insbesondere mindestens einem alpha-Olefin mit 4 oder mehr C-Atomen, bevorzugt mit 4 bis 8 C-Atomen, als Comonomer, wobei in der Regel nur ein anderes alpha-Olefin als Comonomer verwendet wird. Das alpha-Olefin ist z.B. ausgewählt aus 1-Buten, 1-Hexen, 4-Methyl-1-penten, 1-Octen oder Mischungen davon, wobei 1-Octen bevorzugt ist. Der Anteil an von Ethylen verschiedenen alpha-Olefinen, bevorzugt 1-Octen, im LLDPE kann z.B. im Bereich von 1 bis 65 Gew.-%, bevorzugt 3 bis 40 Gew.-%, liegen. Polypropylen-Random-Copolymer ist ein dem Fachmann gut bekannter, handelsüblicher Kunststoff, für den die Abkürzung PP-R (Polypropylen-Random) oder auch r-PP oder PP-Random verwendet wird. Das erfindungsgemäß eingesetzte PP-R weist einen Schmelzflussindex MFI von 0,2 bis 12 g/10 min, bevorzugt im Bereich von 0,3 bis 8 g/10 min, gemäß ISO 1133 (230 °C, 2,16 kg), auf, wobei das Kunststoffmaterial eine Mischung von zwei solcher unterschiedlichen PP-R umfasst.

Das erfindungsgemäß eingesetzte PP-R weist einen Schmelzpunkt von nicht mehr als 150 °C auf.

Bei PP-R handelt es sich um statistische Copolymere von Propylen mit mindestens einem anderem alpha-Olefin, insbesondere mindestens einem alpha-Olefin mit nicht mehr als 8 C-Atomen als Comonomer, wobei in der Regel nur ein anderes alpha-Olefin als Comonomer verwendet wird. Bevorzugte Beispiele für das andere alpha-Olefin sind Ethen, 1-Buten oder Mischungen davon, wobei Ethen bevorzugt ist. Der Anteil an von Propylen verschiedenen alpha-Olefinen, bevorzugt Ethen, im PP-R kann z.B. im Bereich von 0,5 bis 10 Gew.-%, bevorzugt 2 bis 8 Gew.-%, liegen.

In einer bevorzugten Ausführungsform sind in dem Kunststoffmaterial für die mindestens eine Schaumschicht 20 bis 70 Gew.-%, bevorzugt 20 bis 40 Gew.-%, LLDPE und 30 bis 80 Gew.-%, bevorzugt 60 bis 80 Gew.-%, PP-R, bezogen auf das Gesamtgewicht an Kunststoffen in dem Kunststoffmaterial, enthalten.

Neben LLDPE und PP-R kann das Kunststoffmaterial gegebenenfalls noch ein oder mehrere andere Ethylen-basierte Polymere und/oder Propylen-basierte Polymere enthalten. Beispiele für solche Polymere wurden vorstehend für die Oberfolie genannt. Dies ist aber in der Regel nicht bevorzugt, abgesehen von gegebenenfalls als Gleitmittel eingesetzten Wachsen. Der Anteil an Polymeren bzw. Kunststoffen, die von LLDPE und PP-R wie vorstehend definiert verschieden sind, im Kunststoffmaterial liegt z.B. bevorzugt bei unter 10 Gew.-%, bevorzugt unter 5 Gew.-%, bezogen auf das Gewicht des Kunststoffmaterials.

In einer bevorzugten Ausführungsform ist das Kunststoffmaterial insbesondere frei von Ethylen-Blockcopolymeren.

Das Kunststoffmaterial kann gegebenenfalls ein oder mehrere Additive enthalten, die auf dem Gebiet in der Praxis üblich sind. Beispiele für geeignete Additive sind Gleitmittel (innere und/oder äußere), Vernetzungshilfsmittel, Treibmittel, Antioxidationsmittel, Lichtschutzmittel, Pigmente und/oder Füllstoffe. Die Additive können bereits den unterschiedlichen Ausgangspolymeren beigemischt sein, werden jedoch meistens bei der Herstellung des Kunststoffmaterials hinzugegeben.

Das Kunststoffmaterial enthält üblicherweise ein Treibmittel, insbesondere ein thermisch zersetzbares Treibmittel. Das Treibmittel ist z.B. bevorzugt ausgewählt aus Azodicarbonamid, Benzolsulfonylhydrazid, Estern der Zitronensäure und/oder Toluolsulfonylhydrazid.

Die Treibmittelmenge richtet sich nach der angestrebten Dichte, der Effizienz des Schäumvorgangs, der Qualität des Treibmittels und einigen anderen Kriterien. Das Kunststoffmaterial enthält z.B. 0,75 bis 5 Gewichtsteile, bevorzugt 1 bis 5 Gewichtsteile, Treibmittel pro 100 Gewichtsteilen Kunststoff.

Werden Vernetzungshilfsmittel eingesetzt, werden diese bevorzugt ausgewählt aus Divinylbenzol, Ethylvinylbenzol, Trimethylolpropantriacrylat, Trimethylolpropantrimethacrylat, 1,6-Hexandioldiacrylat, 1,2,4-Triallyl-trimellitat und/oder Triallylisocyanurat.

Beispiele für Antioxidantien sind Phenolderivate, Lactone und/oder Phosphite. Beispiele für Lichtschutzmittel sind sterisch gehinderte Amine oder Benzotriazine. Enthält das Kunststoffmaterial Füllstoff und/oder Pigmente, handelt es sich insbesondere um solche in Form von Kaliumaluminiumsilikat, Talkum, Kreide, Kaolin, Metalloxiden und/oder Ruß.

Es kann gegebenenfalls vorteilhaft sein, dass das Kunststoffmaterial mindestens ein Gleitmittel enthält. Hierbei kann es sich um ein inneres oder ein äußeres Gleitmittel handeln. Es ist aber auch möglich, dass inneres und äußeres Gleitmittel gleichzeitig eingesetzt werden.

Das innere Gleitmittel kann z.B. ausgewählt sein aus Kohlenwasserstoffwachsen mit einem Schmelzbereich von 110 bis 160 °C, Alkali- und Erdalkalimetall-Salzen der Stearinsäure, der Palmitinsäure oder der Ölsäure sowie den Amiden und Estern der genannten Säuren oder Mischungen aus den genannten Substanzen. Als besonders vorteilhafte innere Gleitmittel haben sich hochschmelzende Paraffinwachse, insbesondere auf der Basis von Polypropylen oder Polyethylen, erwiesen. Diese Gleitmittel greifen nicht mit in die Vernetzungsreaktion ein und verbessern die Einarbeitung von festen (pulverförmigen) und flüssigen Kunststoff-Additiven.

Das äußere Gleitmittel kann z.B. ausgewählt sein aus metallseifen-haltigen Kombinationsgleitmitteln, wie festen, metallseifen-haltigen

Kombinationsgleitmitteln mit hochmolekularen Anteilen und einem FließSchmelzpunkt von 105 bis 115 °C.

Der Anteil an dem oder den Gleitmitteln (inneres und/oder äußeres) im Kunststoffmaterial, sofern eingesetzt, kann z.B. im Bereich von 0,3 bei 5 Gew.-%, bevorzugt 0,3 bis 2 Gew.-%, liegen.

Wie vorstehend ausgeführt wird das Kunststoffmaterial vernetzt und geschäumt, um die Schaumschicht zu erhalten. Zur Bestimmung des vernetzten Anteils der Kunststoffe im vernetzten und geschäumten Kunststoffmaterial bzw. in der Schaumschicht ist es üblich, den entsprechenden Gelgehalt zu ermitteln, indem der vernetzte Polymeranteil mit Hilfe einer Xylol-Extraktion bestimmt wird, bei der der unvernetzte Anteil herausextrahiert wird. Dies erfolgt bei einer 16 stündigen Extraktion und einer Temperatur von 145 °C. Der vernetzte unlösliche Anteil kann nach Trocknung auf die eingewogene Menge Schaum bezogen werden. Mindestens eine Schaumschicht weist bevorzugt einen Gelgehalt im Bereich von 20 bis 80 Gew.-%, bevorzugter 30 bis 60 Gew.-% auf.

Die ein- oder mehrlagige Oberfolie weist bevorzugt eine Schichtdicke im Bereich von 0,20 bis 0,80 mm auf. Mindestens eine Schaumschicht weist bevorzugt eine Schichtdicke im Bereich von 0,50 bis 1,50 mm auf.

Bei der mindestens einen Schaumschicht handelt es sich bevorzugt um eine Schaumschicht. Es kann sich aber auch um zwei oder mehr Schaumschichten handeln, die die vorstehend angegebenen Eigenschaften aufweisen.

In einer bevorzugten Ausführungsform sind die Oberfolie und die mindestens eine Schaumschicht direkt miteinander verbunden. Die Oberfolie kann nach üblichen Verfahren mit der Schaumschicht verbunden werden. Bevorzugt wird die Oberfolie thermisch oder mittels Kleber auf der Schaumschicht bzw. Schaumfolie kaschiert.

In einer weiteren bevorzugten Ausführungsform umfasst das Kunststofffolienlaminat ferner ein textiles Flächengebilde, das zwischen der Oberfolie und der Schaumschicht oder unterhalb der Schaumschicht als unterste Schicht angeordnet ist. Auch in diesem Fall können Oberfolie, textiles Flächengebilde und Schaumschicht z.B. thermisch oder mittels eines Klebers verbunden werden. Bei den textilen Flächengebilden kann es sich z.B. um Polyester-basierte Textilien oder Baumwoll-basierte Textilien handeln. Diese Ausführungsformen eignen sich z.B. als Kunstleder für den Automobil-, Sport- oder Modebereich, wenn die Oberfolie mit einer Oberflächenstrukturierung oder Prägung versehen wird. Die Oberfolie kann vor der Laminierung mit einer weiteren kompakten, textilen oder geschäumten Schicht laminiert werden.

Die Oberfolie kann üblicherweise mit einem Lack, insbesondere einem Polyurethan-Lack, ausgerüstet sein. Diese Lackausrüstung wird typischerweise vor der Laminierung mit der Schaumschicht auf die Oberfolie aufgebracht. Die Oberfolie kann ferner bevorzugt mit einer Oberflächenstrukturierung bzw. Narbung versehen sein.

Das Kunststofffolienlaminat kann auf eine Trägerstruktur, z.B. aus ABS (Acrylnitril-Butadien-Styrol-Copolymere) oder Naturfasern, aufgebracht werden, insbesondere wenn das Laminat für einen Formkörper verwendet wird. Das Kunststofffolienlaminat und die Trägerstruktur können mit einem Kleber verbunden werden. Das Kunststofflaminat wird mit der Seite der mindestens einen Schaumschicht auf die Trägerstruktur aufgebracht, so dass die Oberfolie die obere sichtbare Oberfläche bildet.

Das fertige Bauteil besteht bevorzugt aus dem Kunststofffolienlaminat und einer Trägerstruktur, z.B. wie vorstehend beschrieben, wobei zwischen diesen beiden Schichten ein Polyurethan-basierter Schaum durch den sogenannten Hinterschäumprozess eingebracht wird.

Die vorliegende Erfindung umfasst auch einen Formkörper, der das erfindungsgemäße Kunststofffolienlaminat wie vorstehend beschrieben umfasst. In der Regel umfasst der Formkörper auch eine Trägerstruktur, auf die das Kunststofffolienlaminat aufgebracht ist wie vorstehend beschrieben. Vorteilhafterweise weist bei diesen Formkörpern die Oberfolie eine genarbte Oberfläche auf.

Das erfindungsgemäße Kunststofffolienlaminat kann im Positiv-Tiefziehverfahren oder im IMG-Verfahren verarbeitet werden, wobei das Kunststofffolienlaminat als Folie eingesetzt wird. Bei diesen Verfahren kann die Oberfolie mit einer Narbung versehen werden. Die Erfindung betrifft daher auch ein Verfahren zur Herstellung eines Formkörpers umfassend das erfindungsgemäße Kunststofffolienlaminat, wobei die Formgebung des Kunststofffolienlaminats durch ein IMG-Verfahren oder ein Positiv-Tiefziehverfahren durchgeführt wird. Das Kunststofffolienlaminat wird dabei in der Regel während oder nach der Formgebung auf eine Trägerstruktur aufgebracht. Bei dem IMG-Verfahren und Positiv-Tiefziehverfahren handelt es sich um im Stand der Technik bekannte Verfahren. Beim IMG-Verfahren (InMoldGraining-Verfahren) erfolgt im Vergleich zum herkömmlichen Kaschierprozess, bei dem eine genarbte Folie auf eine Trägerstruktur mittels Vakuum aufkaschiert wird, der Narbauftrag unmittelbar vor dem Kaschierprozess. Dies erfolgt durch eine Form, die bereits die Narbstruktur enthält und diese Struktur auf die heiße Folie übergibt. Diese genarbte Folie wird in diesem vorgeformten Zustand direkt auf die Trägerstruktur appliziert. Beim Positiv-Tiefziehverfahren wird die Folie bereits beim Kaschieren mit einer Narbung, d.h. durch einen vorhergehenden Prägevorgang mit einer dreidimensionalen Oberflächenstruktur, versehen. Diese Narbung darf durch das Strecken der Folie beim Tiefziehprozess nur so verändert werden, dass die Optik des finalen Bauteils den Anforderungen des Kunden entspricht. Um diese Stabilität zu erreichen, ist es bekannt, die Folie vor dem Tiefziehen durch Elektronenstrahlen zu vernetzen. Der Vernetzungsprozess kann durch Zugabe von Vernetzungshilfsmittel unterstützt werden.

Beim IMG-Verfahren wird das Kunststofffolienlaminat bevorzugt bei einer Temperatur größer 160°C verformt und genarbt. Es wird ein Formkörper bzw. Bauteil aus Kunststofffolienlaminat und der Trägerstruktur erhalten.

Beim Positiv-Tiefziehverfahren, das bevorzugt wenigstens einen, die Narbstruktur auf der Oberfolie bildenden Prägeschritt und eine anschließende Vernetzung umfasst, wird ebenfalls ein Formkörper bzw. Bauteil aus Kunststofffolienlaminat und der Trägerstruktur erhalten.

Eine sich an den Prägeschritt anschließende weitergehende Vernetzung der Oberfolie ist für eine hohe Narbfestigkeit beim Tiefziehen und/oder Verformen vorteilhaft. Die Vernetzung kann chemisch oder physikalisch erfolgen, wobei eine Vernetzung mittels Elektronenstrahlen bevorzugt ist.

Das Kunststofffolienlaminat kann auch durch andere übliche Verfahren weiterverarbeitet werden. Das Kunststofffolienlaminat kann z.B. presskaschiert werden, um ein Bauteil herzustellen.

Die erfindungsgemäßen Kunststofffolienlaminate eignen sich z.B. als Kunstleder, z.B. im Fahrzeugbereich, insbesondere im Automobilbereich, im Sportbereich oder im Modebereich. Die erfindungsgemäßen Kunststofffolienlaminate und Formkörper eignen sich insbesondere für die Verwendung als Innenverkleidung von Fahrzeugen, insbesondere für die Innenverkleidung eines Kraftfahrzeugs, insbesondere für Türinnenverkleidungen und die Verkleidung von Instrumententafeln.

Die erfindungsgemäßen Kunststofffolienlaminate eignen sich insbesondere für Kunstleder oder Formkörper mit Airbag-Funktionalität ohne zusätzliche Schwächung des Kunststofffolienlaminats.

Airbag-Funktionalität bedeutet, dass eine ordnungsgemäße Airbag-Öffnung eines hinter dem Kunstleder oder Formkörper angeordneten Airbags erfolgen kann, da das Kunststofffolienlaminat bei der Airbag-Öffnung in gewünschter Weise aufreißt. Unter einer nach dem Stand der Technik üblicherweise erforderlichen zusätzlichen Schwächung des Kunststofffolienlaminats wird insbesondere z.B. eine mechanische Schwächung des Kunststofffolienlaminats verstanden, z.B. durch eine durch ein Messer oder durch Laserperforation eingebrachten Schwächungslinie in dem Kunststofffolienlaminat, die üblicherweise zwischen dem Thermoformier- und dem Hinterschäumprozess angebracht wird. Bei den erfindungsgemäßen Laminaten ist eine solche zusätzliche Schwächung nicht erforderlich, so dass die dieser zusätzliche Arbeitsschritt entfällt und auch die sich daraus ergebende Beeinträchtigung der Optik vermieden werden kann.

Die Erfindung wird nachfolgend anhand von Beispielen näher erläutert:

### Beispiele

Es wurden 4 Schaumstofffolien hergestellt (Vergleichs-Schaumstofffolie VSF, Schaumstofffolie SF1, die nicht unter die beanspruchte Erfindung fällt, und erfindungsgemäße Schaumstofffolien SF2 und SF3). Die Zusammensetzung für das Kunststoffmaterial ist in nachstehender Tabelle 1 gezeigt. Die Kunststoffmaterialien wurden auf übliche Weise in einem Doppelschneckenextruder extrudiert und anschließend vernetzt und geschäumt. Die Dichten und Daten zur Zugdehnung der erhaltenen Schaumstoffe sind auch in nachstehender Tabelle gezeigt.

| Substanz | | VSF | SF1 | SF2 | SF3 |
|---|---|---|---|---|---|
| PP1 | | 35 | 35 | 30 | 35 |
| PP2 | | 35 | 30 | 35 | 25 |
| PE1 | | 30 | | 15 | 20 |
| PE2 | | | 35 | 20 | 20 |
| ADC | | 8,5 | 3 | 2 | 1 |
| GM1 | | 1 | 1 | 1 | 1 |
| GM2 | | 1 | 1 | 1 | 1 |
| VHM | | 2 | 2 | 2 | 2 |
| Dichte | | 67 | 300 | 450 | 500 |
| Zugdehnung, längs [%] Din En Iso 527-3, Typ 2 500mm/min | | 350 | 700 | 850 | 1200 |
| Zugdehnung, quer [%] Din En Iso 527-3, Typ 2 500mm/min | | 250 | 600 | 680 | 1000 |
| PP1: | stat. Copolymer aus Propylen mit 5 Gew.- % Ethylen (230°C, 2,16 kg) = 2 g/10 min, M_{w} = 400000 g/mol, Smp. 141°C | | | | |
| PP2: | stat. Copolymer aus Propylen mit 3 Gew.- % Ethylen (230°C, 2,16 kg) = 8 g/10 min, M_{w} = 225000 g/mol Smp. 148°C | | | | |
| PE1: | LLD-PE (Linear Low Density Polyethylen) mit 5 Gew.-% 1-Octen (190°C, 2,16 kg) = 1 g/10 min | | | | |
| PE2: | LLD-PE (Linear Low Density Polyethylen) mit 19 Gew.-% 1-Octen (190°C, 2,16 kg) = 1 g/10 min | | | | |
| ADC | Treibmittel Azodicarbonamid | | | | |
| GM1 | Gleitmittel 1, hochmolekularer Komplex, Fließschmelzpunkt 105 - 115°C, Säurezahl < 12 | | | | |
| GM2 | Gleitmittel 2, Hartparaffinwachs, Fließschmelzpunkt 101 - 110°C, Säurezahl < 1 | | | | |
| VHM | Vernetzungshilfsmittel Triallylisocyanurat | | | | |

Zur Herstellung von Formkörpern gemäß den Beispielen 1 und 2, die nicht unter die beanspruchte Erfindung fallen, wurde die hergestellte Schaumschicht SF1 (geschäumte Unterfolie) mit kompakten Oberfolien unterschiedlicher Dicken (Beispiel 1: 0,7 mm; Beispiel 2: 0,5 mm) laminiert, um Kunststofflaminate zu erhalten. Die Oberfolie ist mit einem Polyurethan-Lack ausgerüstet. Die Folien wurden im Falle von Beispiel 1 im IMG Verfahren und im Falle von Beispiel 2 im positiv-Tiefziehverfahren zu Instrumententafeln verarbeitet. In beiden Fällen wurden positive Verarbeitungsverhalten berichtet. Die anschließend durchgeführten Airbagschüsse entsprachen den Erwartungen des Kunden.

Für die Vergleichsbeispiele 1 und 2 wurde die gleiche Oberfolie wie für die Beispiele 1 und 2 verwendet. In Vergleichsbeispiel 1 wurde ein 2 mm dicker auf Polyolefinen basierter Schaumstoff mit einer Dichte von 83 kg/m³, in Vergleichsbeispiel 2 wurde als Unterfolie eine 0,9 mm dicke kompakte auf Polyolefinen basierte Folie verwendet. Für die Schaumschicht bzw. Unterfolie der Vergleichsbeispiele 1 und 2 wurden Materialien genutzt, wie sie dem aktuellen Stand der Technik entsprechen

Bei keinem der hergestellten Formkörper erfolgte eine zusätzliche Schwächung des Kunststofflaminats. Die Ergebnisse von geprüften Eigenschaften sind in nachstehender Tabelle gezeigt.

| Substanz | Vergleichsbeispiel 1 | Vergleichsbeispiel 2 (IMG) | Beispiel 1 (IMG) | Beispiel 2 (positiv TZ) |
|---|---|---|---|---|
| Dicke Oberfolie [mm] | 0,5 | 0,7 | 0,7 | 0,5 |
| Dicke Unterfolie / Schaum [mm] | 2,0 | 0,7 | 0,7 | 0,9 |
| Gesamtdicke [mm] | 2,5 | 1,4 | 1,4 | 1,4 |
| Dichte Oberfolie [kg/m³] | 900 | 900 | 900 | 900 |
| Dichte Unterfolie / Schaum [kg/m³] | 83 | 900 | 300 | 300 |
| Flächengewicht Konstruktion [g/m²] | 620 | 1260 | 840 | 720 |
| Bauteilherstellung | Positiv-Tiefziehen und gleichzeitiges Verkleben mit Trägerteil | Thermoformieren des Kunststofffolie und anschließendes Hinterschäumen und Verbinden mit Trägerteil | | |
| Zugfestigkeit [N/mm²], längs | 10 | 17 | 9 | 7 |
| Zugfestigkeit [N/mm²], quer | 9 | 15 | 8 | 7 |
| Zugdehnung [%], längs | 1200 | 1700 | 900 | 750 |
| Zugdehnung [%],quer | 1000 | 1500 | 800 | 500 |
| Tiefziehen Instrumententafel (Verzug > 200 %) | n.i.O. | i.O. | i.O. | i.O. |
| Gewichtseinsparung [%] | 50 | 0 | 48 | 43 |
| Bewertung Gewichtseinsparung | i.O. | n.i.O. | i.O. | i.O. |
| Ungeschwächte Airbag-Öffnung bei -35°C | n.i.O. | n.i.O. | i.O. | i.O. |
| Ungeschwächte Airbag-Öffnung bei 23°C | n.i.O. | n.i.O. | i.O. | i.O. |
| Ungeschwächte Airbag-Öffnung bei 85°C | n.i.O. | n.i.O. | i.O. | i.O. |
| Bewertung Konstruktion | n.i.O. | n.i.O. | i.O. | i.O. |

| | | | | |
|---|---|---|---|---|
| i.O. = in Ordnung; n.i.O. = nicht in Ordnung Flächengewicht Konstruktion bezieht sich auf das Flächengewicht des Kunststofffolienlaminats. | | | | |

Die Beispiele 1 und 2 wurden auf Instrumententafelwerkzeuge thermoformiert. Hierbei wurde Beispiel 1 im IMG-, Beispiel 2 im positiv-Tiefziehverfahren verarbeitet. Beide Werkzeuge beinhalten Bereiche, die eine mehr als 200 % Verstreckung des Kunststofffolienlaminates erfordern. Die Bewertung des Bauteils fand nach diversen Kriterien statt. Hierbei wurde die Verarbeitbarkeit im angewandten Umformprozess, die Narbabbildung im IMG- bzw. der Narberhalt im postiv-Tiefziehprozess sowie die weitere Handhabung der aus dem Kunststofffolienlaminat hergestellten Haut bewertet. Das aus dieser Haut durch Hinterschäumen und gleichzeitigem Verbinden mit einem aus langglasfaserverstärktem Polypropylen hergestellte Trägerteil, auch Substrat genannt, wurde unter den Standardtemperaturen -35°C, 23°C und 85°C auf seine Fähigkeit geprüft, auch ohne zusätzlich eingebrachte Schwächung einen den jeweiligen Anforderungen des Kunden an eine Öffnung eines Airbags zu erfüllen. Hierbei wurden Kriterien bewertet, die die Zeit zum Öffnen des Airbags, die Ablösung von Teilen vom Bauteil, auch Partikelflug genannt, sowie der von der Ausbreitungscharakteristik ausgehende Schutz des Fahrzeuginsassen bewerten. Weiteres Kriterium ist die Konturtreue, mit der das Kunststofffolienlaminat entlang den Kanten der Airbagtüren reißt. Alle vom Kunden bewerteten Kriterien entsprachen seinen Anforderungen, welches zusammenfassend in der obigen Tabelle mit i.O. (in Ordung) aufgeführt wurden.

## Patentansprüche

1. Kunststofffolienlaminat, umfassend eine ein- oder mehrlagige Oberfolie und mindestens eine Schaumschicht aus einem vernetzten und geschäumten Kunststoffmaterial, **dadurch gekennzeichnet, dass** die mindestens eine Schaumschicht eine Dichte von 250 bis kleiner 600 kg/m³ aufweist und das Kunststoffmaterial für die Schaumschicht eine Mischung aus zwei unterschiedlichen linearen Polyethylenen niederer Dichte (LLDPE) mit einem Schmelzflussindex MFI von kleiner 2 g/10 min gemäß ISO 1133 (190 °C, 2,16 kg) und eine Mischung von zwei unterschiedlichen Polypropylen-Random-Copolymeren (PP-R) mit einem Schmelzpunkt von nicht mehr als 150 °C und einem Schmelzflussindex MFI von 0,2 bis 12 g/10 min gemäß ISO 1133 (230 °C, 2,16 kg) umfasst.

2. Kunststofffolienlaminat nach Anspruch 1, **dadurch gekennzeichnet, dass** die ein- oder mehrlagige Oberfolie eine Schichtdicke im Bereich von 0,20 bis 0,80 mm aufweist und/oder die mindestens eine Schaumschicht eine Schichtdicke im Bereich von 0,50 bis 1,50 mm aufweist.

3. Kunststofffolienlaminat nach Anspruch 1 oder Anspruch 2, **dadurch gekennzeichnet, dass** die mindestens eine Schaumschicht einen Gelgehalt im Bereich von 20 bis 80 Gew.-% aufweist.

4. Kunststofffolienlaminat nach irgendeinem der Ansprüche 1 bis 3, **dadurch gekennzeichnet, dass** in dem Kunststoffmaterial für die mindestens eine Schaumschicht 20 bis 70 Gew.-% LLDPE und 30 bis 80 Gew.-% PP-R, bezogen auf das Gesamtgewicht an Kunststoffen in dem Kunststoffmaterial, enthalten sind.

5. Kunststofffolienlaminat nach irgendeinem der Ansprüche 1 bis 4, **dadurch gekennzeichnet, dass** das Kunststoffmaterial 0,75 bis 5 Gewichtsteile Treibmittel pro 100 Gewichtsteilen Kunststoff enthält.

6. Kunststofffolienlaminat nach irgendeinem der Ansprüche 1 bis 5, **dadurch gekennzeichnet, dass** die mindestens eine Schaumschicht eine Dichte von mehr als 250 bis weniger als 600 kg/m³ aufweist.

7. Kunststofffolienlaminat nach irgendeinem der Ansprüche 1 bis 6, **dadurch gekennzeichnet, dass** die ein- oder mehrlagige Oberfolie eine Dichte von mindestens 0,86 g/cm³, bevorzugt im Bereich von 0,88 bis 0,91 g/cm³, aufweist.

8. Kunststofffolienlaminat nach irgendeinem der Ansprüche 1 bis 7, **dadurch gekennzeichnet, dass** die ein- oder mehrlagige Oberfolie eine Polyolefin-Folie, eine Polyvinylchlorid-Folie oder eine Polyurethan-Folie ist.

9. Kunststofffolienlaminat nach irgendeinem der Ansprüche 1 bis 8, **dadurch gekennzeichnet, dass** die ein- oder mehrlagige Oberfolie eine Polyolefin-Folie umfassend Ethylen-basiertes Polymer und Propylen-basiertes Polymer ist.

10. Kunststofffolienlaminat nach irgendeinem der Ansprüche 1 bis 9, **dadurch gekennzeichnet, dass** das Kunststofffolienlaminat ferner ein textiles Flächengebilde umfasst, das zwischen der Oberfolie und der mindestens einen Schaumschicht oder unterhalb der mindestens einen Schaumschicht als unterste Schicht angeordnet ist, und/oder das Kunststofffolienlaminat auf einer Trägerstruktur aufgebracht ist.

11. Kunststofffolienlaminat nach irgendeinem der Ansprüche 1 bis 10, **dadurch gekennzeichnet, dass** die Oberfolie thermisch oder durch einen Kleber auf der mindestens einen Schaumschicht kaschiert ist.

12. Formkörper, umfassend das Kunststofffolienlaminat nach irgendeinem der Ansprüche 1 bis 11, wobei der Formkörper bevorzugt die Innenverkleidung eines Kraftfahrzeuges ist.

13. Verfahren zur Herstellung eines Formkörpers nach Anspruch 12, wobei die Formgebung des Kunststofffolienlaminats durch ein IMG-Verfahren oder ein Positiv-Tiefziehverfahren durchgeführt wird, wobei das Kunststofffolienlaminat während oder nach der Formgebung gegebenenfalls auf eine Trägerstruktur aufgebracht wird.

14. Verwendung eines Kunststofffolienlaminats nach irgendeinem der Ansprüche 1 bis 11 als Kunstleder oder für einen Formkörper, bevorzugt für eine Innenraumverkleidung eines Kraftfahrzeuges, insbesondere für eine Verkleidung einer Instrumententafel oder eine Türverkleidung eines Kraftfahrzeuges.

15. Verwendung des Kunststofffolienlaminats nach Anspruch 14 für Kunstleder oder Formkörper mit Airbag-Funktionalität ohne zusätzliche Schwächung des Kunststofffolienlaminats.

## Claims

1. Plastic film laminate comprising a single-layer or multilayer top film and at least one foam layer made of a crosslinked and foamed plastics material, **characterized in that** the at least one foam layer has a density of 250 to less than 600 kg/m³ and the plastics material for the foam layer comprises a blend of two different linear low-density polyethylenes (LLDPE) having a melt flow index MFI of less than 2 g/10 min according to ISO 1133 (190 °C, 2.16 kg) and a blend of two different polypropylene random copolymers (PP-R) having a melting point of not more than 150 °C and a melt flow index MFI of 0.2 to 12 g/10 min according to ISO 1133 (230 °C, 2.16 kg).

2. Plastic film laminate according to claim 1, **characterized in that** the single-layer or multilayer top film has a layer thickness in the range of 0.20 to 0.80 mm and/or the at least one foam layer has a layer thickness in the range of 0.50 to 1.50 mm.

3. Plastic film laminate according to claim 1 or claim 2, **characterized in that** the at least one foam layer has a gel content in the range of 20 to 80 wt. %.

4. Plastic film laminate according to any one of claims 1 to 3, **characterized in that** the plastics material for the at least one foam layer contains 20 to 70 wt. % LLDPE and 30 to 80 wt. % PP-R, based on the total weight of plastics in the plastics material.

5. Plastic film laminate according to any one of claims 1 to 4, **characterized in that** the plastics material contains 0.75 to 5 parts by weight of blowing agent per 100 parts by weight of plastics.

6. Plastic film laminate according to any one of claims 1 to 5, **characterized in that** the at least one foam layer has a density of more than 250 to less than 600 kg/m³.

7. Plastic film laminate according to any one of claims 1 to 6, **characterized in that** the single-layer or multilayer top film has a density of at least 0.86 g/cm³, preferably in the range of 0.88 to 0.91 g/cm³.

8. Plastic film laminate according to any one of claims 1 to 7, **characterized in that** the single-layer or multilayer top film is a polyolefin film, a polyvinyl chloride film or a polyurethane film.

9. Plastic film laminate according to any one of claims 1 to 8, **characterized in that** the single-layer or multilayer top film is a polyolefin film comprising an ethylene-based polymer and a propylene-based polymer.

10. Plastic film laminate according to any one of claims 1 to 9, **characterized in that** the plastic film laminate further comprises a textile sheet material which is arranged between the top film and the at least one foam layer or below the at least one foam layer as the lowermost layer, and/or the plastic film laminate is applied to a carrier structure.

11. Plastic film laminate according to any one of claims 1 to 10, **characterized in that** the top film is laminated thermally or by means of an adhesive onto the at least one foam layer.

12. Moulded body comprising the plastic film laminate according to any one of claims 1 to 11, wherein the moulded body is preferably the interior trim of a motor vehicle.

13. Method for producing a moulded body according to claim 12, wherein the plastic film laminate is shaped by an IMG method or a positive thermoforming method, wherein the plastic film laminate is optionally applied to a carrier structure during or after shaping.

14. Use of a plastic film laminate according to any one of claims 1 to 11 as artificial leather or for a moulded body, preferably for an interior trim of a motor vehicle, in particular for a trim of an instrument panel or a door trim of a motor vehicle.

15. Use of the plastic film laminate according to claim 14 for artificial leather or moulded bodies having airbag functionality without additional weakening of the plastic film laminate.

## Revendications

1. Stratifié de film plastique comprenant un film supérieur monocouche ou multicouche et au moins une couche de mousse constituée d'une matière plastique réticulée et expansée, **caractérisé en ce que** l'au moins une couche de mousse présente une masse volumique de 250 à moins de 600 kg/m³ et **en ce que** la matière plastique destinée à la couche de mousse comprend un mélange de deux polyéthylènes linéaires basse densité (LLDPE) différents présentant un indice de fluidité à chaud MFI inférieur à 2 g/10 min selon la norme ISO 1133 (190 °C, 2,16 kg) et un mélange de deux copolymères statistiques de polypropylène (PP-R) différents présentant un point de fusion ne dépassant pas 150 °C et un indice de fluidité à chaud MFI de 0,2 à 12 g/10 min selon la norme ISO 1133 (230 °C, 2,16 kg).

2. Stratifié de film plastique selon la revendication 1, **caractérisé en ce que** le film supérieur monocouche ou multicouche présente une épaisseur de couche comprise entre 0,20 et 0,80 mm et/ou **en ce que** l'au moins une couche de mousse présente une épaisseur de couche comprise entre 0,50 et 1,50 mm.

3. Stratifié de film plastique selon la revendication 1 ou la revendication 2, **caractérisé en ce que** l'au moins une couche de mousse présente une teneur en gel comprise entre 20 et 80 % en poids.

4. Stratifié de film plastique selon l'une quelconque des revendications 1 à 3, **caractérisé en ce que** la matière plastique destinée à l'au moins une couche de mousse contient de 20 à 70 % en poids de LLDPE et de 30 à 80 % en poids de PP-R, par rapport au poids total des matières plastiques contenues dans la matière plastique.

5. Stratifié de film plastique selon l'une quelconque des revendications 1 à 4, **caractérisé en ce que** la matière plastique contient de 0,75 à 5 parties en poids d'agent gonflant pour 100 parties en poids de matière plastique.

6. Stratifié de film plastique selon l'une quelconque des revendications 1 à 5, **caractérisé en ce que** l'au moins une couche de mousse présente une masse volumique supérieure à 250 et inférieure à 600 kg/m³.

7. Stratifié de film plastique selon l'une quelconque des revendications 1 à 6, **caractérisé en ce que** le film supérieur monocouche ou multicouche présente une masse volumique d'au moins 0,86 g/cm³, de préférence comprise entre 0,88 et 0,91 g/cm³.

8. Stratifié de film plastique selon l'une quelconque des revendications 1 à 7, **caractérisé en ce que** le film supérieur monocouche ou multicouche est un film de polyoléfine, un film de polychlorure de vinyle ou un film de polyuréthane.

9. Stratifié de film plastique selon l'une quelconque des revendications 1 à 8, **caractérisé en ce que** le film supérieur monocouche ou multicouche est un film de polyoléfine comprenant un polymère à base d'éthylène et un polymère à base de propylène.

10. Stratifié de film plastique selon l'une quelconque des revendications 1 à 9, **caractérisé en ce que** le stratifié de film plastique comprend en outre une structure textile plane qui est disposée entre le film supérieur et l'au moins une couche de mousse ou au-dessous de l'au moins une couche de mousse en tant que couche la plus basse, et/ou **en ce que** le stratifié de film plastique est appliqué sur une structure porteuse.

11. Stratifié de film plastique selon l'une quelconque des revendications 1 à 10, **caractérisé en ce que** le film supérieur est contrecollé sur l'au moins une couche de mousse par voie thermique ou au moyen d'un adhésif.

12. Corps moulé comprenant le stratifié de film plastique selon l'une quelconque des revendications 1 à 11, le corps moulé étant de préférence l'habillage intérieur d'un véhicule automobile.

13. Procédé de fabrication d'un corps moulé selon la revendication 12, dans lequel la mise en forme du stratifié de film plastique est réalisée par un procédé IMG ou un procédé de thermoformage positif, le stratifié de film plastique étant, le cas échéant, appliqué sur une structure porteuse pendant ou après la mise en forme.

14. Utilisation d'un stratifié de film plastique selon l'une quelconque des revendications 1 à 11 comme cuir synthétique ou pour un corps moulé, de préférence pour un habillage intérieur d'un véhicule automobile, en particulier pour un habillage d'un tableau de bord ou un habillage de porte d'un véhicule automobile.

15. Utilisation du stratifié de film plastique selon la revendication 14 pour du cuir synthétique ou des corps moulés présentant une fonctionnalité d'airbag sans affaiblissement supplémentaire du stratifié de film plastique.
